(19) **Europäisches Patentamt / European Patent Office / Office européen des brevets**

(11) **EP 3 752 414 B1**

(12) **FASCICULE DE BREVET EUROPEEN**

(45) Date de publication et mention
de la délivrance du brevet:
**29.05.2024 Bulletin 2024/22**

(21) Numéro de dépôt: **19710744.4**

(22) Date de dépôt: **13.02.2019**

(51) Classification Internationale des Brevets (IPC):
**B62M 6/45** (2010.01)   **H02J 7/00** (2006.01)
**B60L 58/00** (2019.01)   **B60L 58/12** (2019.01)
**B60L 53/14** (2019.01)   **B60L 53/65** (2019.01)

(52) Classification Coopérative des Brevets (CPC):
**B62M 6/45; B60L 50/20; B60L 53/14; B60L 53/16;
B60L 53/22; B60L 53/31; B62H 3/00; B62K 3/002;
H02J 7/0013; H02J 7/0042;** B60L 2200/12;
B60L 2260/22; B62H 2003/005; B62K 2204/00;
H02J 2310/40;                                    (Cont.)

(86) Numéro de dépôt international:
**PCT/FR2019/050322**

(87) Numéro de publication internationale:
**WO 2019/158860 (22.08.2019 Gazette 2019/34)**

(54) **PROCÉDÉ DE RECHARGEMENT D'UN DISPOSITIF DE STOCKAGE D'ÉNERGIE ÉLECTRIQUE D'UNE PLURALITÉ DE VÉHICULES**

VERFAHREN ZUM WIEDERAUFLADEN EINES ELEKTRISCHEN ENERGIESPEICHERS ZUR SPEICHERUNG ELEKTRISCHER ENERGIE VON MEHREREN FAHRZEUGEN

METHOD FOR RECHARGING AN ELECTRICAL ENERGY STORAGE DEVICE STORING ELECTRICAL ENERGY OF A PLURALITY OF VEHICLES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.02.2018 FR 1851195**

(43) Date de publication de la demande:
**23.12.2020 Bulletin 2020/52**

(73) Titulaire: **Birota
92170 Vanves (FR)**

(72) Inventeurs:
• **CARREEL, Eric
92190 Meudon (FR)**
• **LE RODALLEC, Arnaud
75006 Paris (FR)**
• **SAUVAGEOT, Pierre
78210 Saint-Cyr-L'Ecole (FR)**
• **RETIERE, Thibault
75015 Paris (FR)**
• **GAILLOT, Victor
75014 Paris (FR)**
• **BARROCHIN, Pierre
64200 Biarritz (FR)**
• **MOLINES, Thomas
92240 Malakoff (FR)**

(74) Mandataire: **Yes My Patent
32 Boulevard Richard Lenoir
75011 Paris (FR)**

(56) Documents cités:
DE-A1-102007 038 243    JP-A- H11 285 109
US-A- 6 087 806         US-A1- 2010 228 405
US-A1- 2012 005 031     US-A1- 2017 364 995

(52) Classification Coopérative des Brevets (CPC):
(Cont.)
Y02T 90/16

## Description

### DOMAINE TECHNIQUE DE L'INVENTION

Le domaine de l'invention est celui des systèmes électriques.

Plus précisément, l'invention concerne un procédé de rechargement d'un dispositif de stockage d'énergie électrique d'une pluralité de véhicules.

L'invention trouve notamment des applications pour recharger des batteries de véhicules électriques tels que des bicyclettes à assistance électrique ou des trottinettes électriques.

### ÉTAT DE LA TECHNIQUE

Il est connu de l'art antérieur des techniques pour recharger des batteries d'une flotte de véhicules électriques en installant notamment des bornes individuelles pour chaque véhicule de la flotte.

L'inconvénient principal de l'installation de ces bornes individuelles est de nécessiter l'installation d'une multitude de bornes fixes, ce qui implique de monopoliser une grande surface pour recharger la flotte. En outre, chaque borne étant alimentée en courant, la mise en place d'une multitude de bornes fixes est longue et fastidieuse.

Afin d'améliorer la mise en place du système de recharge, il existe des techniques permettant de recharger des batteries d'une pluralité de véhicules en les connectant chacun à une borne unique.

Toutefois, l'inconvénient de ces systèmes est que le chargement des batteries des véhicules de la flotte est long et fastidieux pour permettre à un individu d'utiliser un véhicule avec un niveau de batterie suffisant, conférant une autonomie acceptable à l'utilisation du véhicule. Le document DE102007038243 décrit un procédé de rechargement d'un dispositif de stockage d'énergie électrique de tout ou partie d'une pluralité de véhicules selon le préambule de la revendication 1.

Aucun des systèmes actuels ne permet de répondre simultanément à tous les besoins requis, à savoir de proposer une technique qui permette de recharger une flotte de véhicules de manière astucieuse, tout en minimisant les opérations de mise en place et de maintenance du système de recharge.

### EXPOSÉ DE L'INVENTION

La présente invention vise à remédier à tout ou partie des inconvénients de l'état de la technique cités ci-dessus.

A cet effet, la présente invention vise un procédé de rechargement d'un dispositif de stockage d'énergie électrique de tout ou partie d'une pluralité de véhicules connectés à la chaîne, l'ensemble des véhicules connectés à la chaîne étant appelé stock, chaque véhicule comprenant un circuit électronique connecté audit dispositif de stockage d'énergie.

En d'autres termes, les véhicules sont connectés en série, les uns aux autres.

Les véhicules du stock sont généralement similaires voire identiques.

De tels véhicules peuvent notamment être un véhicule à propulsion humaine tel qu'une bicyclette, également appelée vélo, un tricycle, une trottinette, une voiture à pédale, un pédalo, etc. Généralement, la propulsion humaine est assurée par un dispositif de pédalage utilisé par un individu, le dispositif de pédalage comprenant généralement deux manivelles entraînant l'arbre de pédalier en rotation.

Les véhicules sont notamment électriques dans la mesure où ils comprennent généralement un dispositif électrique d'assistance à la propulsion et comprennent un dispositif de stockage d'énergie électrique, pouvant être également appelé batterie.

Les véhicules peuvent également être des trottinettes électriques. Une telle trottinette est généralement à propulsion humaine dans la mesure où une trottinette électrique peut être propulsée par un individu se servant de l'une de ses jambes pour faire avancer la trottinette en poussant le sol avec le pied associé. En particulier, certains modèles nécessitent une telle poussée humaine pour « amorcer » la mise en route du dispositif électrique d'assistance à la propulsion.

Selon l'invention, le rechargement du ou des dispositif(s) de stockage d'énergie est effectué par l'intermédiaire d'un courant électrique circulant entre les circuits électroniques d'au moins deux véhicules consécutifs parmi les véhicules du stock.

Ainsi, le transfert de l'énergie s'effectue de proche en proche entre chaque véhicule du stock. Ce procédé de rechargement est notamment utile pour recharger les batteries d'une pluralité de véhicules stockées de manière compacte, telle que décrit dans les demandes de brevet internationales déposées sous les numéros PCT/FR2018/052385 et PCT/FR2018/053519.

Avantageusement, les circuits électroniques sont connectés en série.

Selon l'invention, le procédé de rechargement comprend une étape de sélection automatique d'au moins un dispositif de stockage d'énergie électrique à charger, en fonction de la position des véhicules par rapport à un véhicule de référence du stock et en fonction de l'état de charge du dispositif de stockage d'énergie électrique de chaque véhicule.

Ainsi, le rechargement des dispositifs de stockage d'énergie est priorisé afin qu'un individu puisse prendre et utiliser un véhicule du stock avec suffisamment d'énergie.

Il convient de souligner qu'un individu commence généralement à prendre un véhicule situé à une extrémité libre du stock, les autres véhicules ne pouvant généralement pas être déconnectés seuls.

Le véhicule de référence peut notamment être un véhicule situé à une des deux extrémités du stock.

Dans des modes de réalisation particuliers de l'invention, chaque véhicule comprend un jeu d'accouplement comprenant des moyens d'accroche et des moyens d'accroche complémentaire, les moyens d'accroche étant aptes à s'accoupler à des moyens d'accroche complémentaire présentés par un deuxième véhicule similaire ou par une borne, les véhicules du stock étant accouplés les uns aux autres, les moyens d'accroche et les moyens d'accroche complémentaire comprenant chacun des moyens de connexion électrique complémentaires, aptes à connecter électriquement ledit véhicule avec le deuxième véhicule ou avec la borne.

Selon l'invention, les véhicules comprenant également chacun un module électronique, le procédé comprenant également des étapes de :

- détermination d'un module électronique dit « maître » parmi les modules électroniques compris dans les véhicules du stock ;
- communication au module maître de la liste des véhicules du stock et de l'état du dispositif de stockage d'énergie électrique de chaque véhicule du stock ;
- communication par le module maître d'une commande au module de chaque véhicule du stock afin de connecter la ou les dispositif(s) de stockage d'énergie électrique sélectionnée(s) à un circuit de charge relié à l'alimentation, les autres dispositifs de stockage d'énergie électrique du stock étant déconnectés du circuit de charge ;
- rechargement des dispositifs de stockage d'énergie électrique sélectionnées.

Selon l'invention, le procédé comprend également une étape de communication au module maître de la position des véhicules du stock par rapport à un élément de référence qui est un véhicule du stock ou la borne.

Dans des modes de réalisation particuliers de l'invention, le procédé comprend également des étapes de :

- communication au module maître d'au moins un voisin pour chaque véhicule du stock ;
- détermination de la position des véhicules du stock par rapport à un élément de référence qui est un véhicule du stock ou la borne.

Selon l'invention, lequel la sélection de la ou des dispositif(s) de stockage d'énergie électrique à charger est restreinte à un nombre prédéterminé, ladite sélection comprenant la ou les dispositif(s) de stockage d'énergie électrique ayant un niveau de charge inférieur à un seuil prédéterminé, parmi les dispositifs de stockage d'énergie électrique des véhicules du stock situés à une distance prédéterminée d'une extrémité du stock, ladite extrémité correspondant au véhicule de référence du stock.

Selon l'invention, le stock est connecté à une borne reliée à une alimentation électrique via un véhicule du stock, la borne comprenant un module électronique et le module maître étant déterminé parmi les modules électroniques compris dans les véhicules du stock ou dans la borne.

Dans des modes de réalisation particuliers de l'invention, le procédé comprend également des étapes de :

- détection d'une modification du nombre de véhicules du stock ;
- mise à jour de la sélection du ou des dispositif(s) de stockage d'énergie électrique à charger.

Dans des modes de réalisation particuliers de l'invention, le module électronique d'un premier véhicule du stock détecte l'accouplement d'un deuxième véhicule du stock sur un des moyens d'accroche du premier véhicule, identifie le deuxième véhicule et établit un réseau de communication avec le deuxième véhicule.

Il convient de souligner que le réseau de communication peut être sans fil par exemple selon le format Wifi ou Bluetooth®, ou être de type « courant porteur de ligne » (CPL).

Dans des modes de réalisation particuliers de l'invention, les communications sont effectuées via un protocole de communication sans fil tel que Bluetooth® Low Energy (BLE) ou Wifi.

Dans des modes de réalisation particuliers de l'invention, le véhicule est une bicyclette électrique ou une trottinette véhicule, ledit véhicule comprenant un dispositif d'assistance à la propulsion du véhicule.

## BRÈVE DESCRIPTION DES FIGURES

D'autres avantages, buts et caractéristiques particulières de la présente invention ressortiront de la description non limitative qui suit d'au moins un mode de réalisation particulier des dispositifs et procédé objets de la présente invention, en regard des dessins annexés, dans lesquels :

- la figure 1 représente une vue d'un véhicule objet d'un procédé de rechargement selon l'invention ;
- la figure 2 est une vue du stockage de véhicule de la figure 1 ;
- la figure 3 est une vue schématique en coupe du stockage de véhicule de la figure 2, illustrant les moyens d'accouplement entre deux véhicules ;
- la figure 3B est un schéma électrique simplifié du stockage de véhicule de la figure 2 ;
- la figure 4 est une vue de dessus d'un stock de véhicules de la figure 1 ;
- la figure 5 est un schéma synoptique d'un procédé de rechargement de tout ou partie du stock de la figure 4 ;
- la figure 6 est une vue en perspective d'un autre véhicule objet d'un procédé de rechargement selon l'invention ;
- la figure 7 est une vue de dessus du véhicule de la figure 6 ;
- la figure 8 est une vue en perspective d'un stock de véhicules de la figure 6 ;
- la figure 9 est une vue schématique en coupe des moyens d'accouplement entre deux véhicules de la figure 6 ;
- la figure 10 est un schéma électrique simplifié du véhicule de la figure 6 ;
- la figure 11 est un schéma électrique simplifié de la borne de la figure 9 ;
- la figure 12 est schéma synoptique d'un procédé de rechargement de tout ou partie du stock de la figure 9

## DESCRIPTION DÉTAILLÉE DE MODES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

Exemple d'un mode de réalisation particulier de l'invention

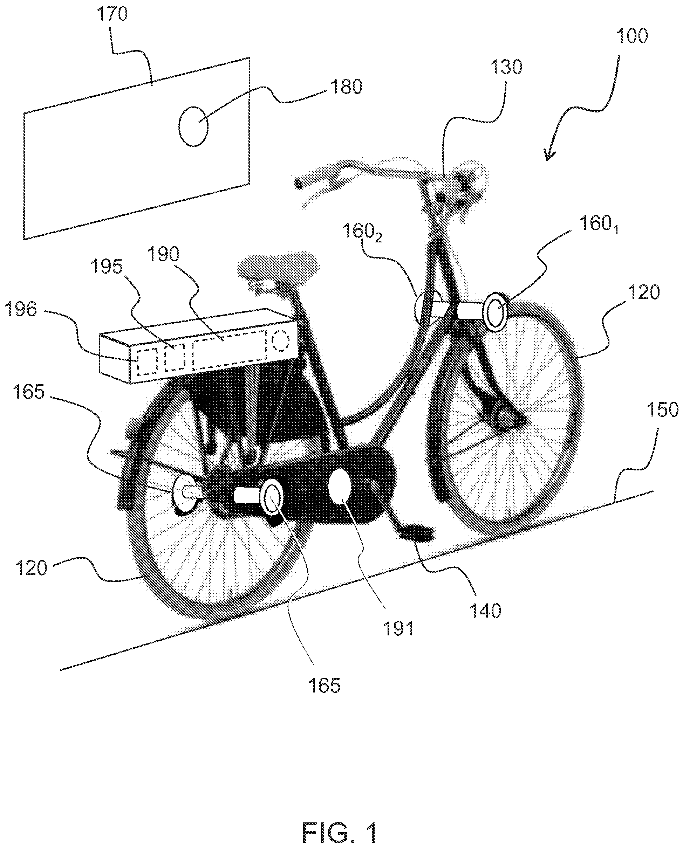

La figure 1 représente un véhicule 100 à propulsion humaine, couramment connu sous le nom de bicyclette. Le véhicule 100 comprenant notamment un cadre tubulaire 110, deux roues 120, un guidon 130 et un pédalier 140, est appelé dans la suite de la description bicyclette 100. La structure du véhicule 100 est par conséquent dans le présent exemple non limitatif de l'invention le cadre 110 de la bicyclette 100.

Il convient de souligner que la bicyclette 100 se déplace selon un axe longitudinal 150 lorsque les roues 120 sont parallèles.

Le cadre de la bicyclette 100 est sensiblement symétrique par rapport à un plan médian 151 parallèle à l'axe longitudinal 150, le plan médian 151 comprenant généralement les deux roues 120 lorsqu'elles sont parallèles.

La bicyclette 100 présente latéralement de chaque côté, déportées d'une distance définie par rapport au plan médian 151, une zone 160 d'accroche avant et une zone 165 d'accroche situé à l'arrière de la bicyclette 100.

Il convient de souligner que la zone $160_1$ d'accroche, d'un côté de la bicyclette 100, est avantageusement complémentaire de la zone $160_2$ d'accroche, de l'autre côté de la bicyclette 100.

En d'autres termes, la bicyclette 100 comprend deux jeux d'accouplement, un à l'avant de la bicyclette 100 et l'autre à l'arrière de la bicyclette 100, le jeu d'accouplement avant comprenant une zone $160_1$ d'accroche et une zone $160_2$ d'accroche complémentaire, le jeu d'accouplement arrière comprenant une zone $165_1$ d'accroche et une zone $165_2$ d'accroche complémentaire.

Dans des variantes de ce mode de réalisation particulier de l'invention, la bicyclette 100 comprend qu'un seul jeu d'accouplement, préférentiellement à proximité de l'avant de la bicyclette 100, comprenant une zone d'accroche et une zone d'accroche complémentaire.

Dans le présent exemple non limitatif de l'invention, les deux zones 160 d'accroche avant sont sensiblement à l'aplomb de l'axe de rotation de la roue avant $120_A$, tandis que les deux zones 165 d'accroche arrière sont sensiblement dans l'axe de rotation de la roue arrière 120B.

Les zones 160, 165 permettent de maintenir la bicyclette 100 à un dispositif 170 présentant au moins une zone 180 d'accroche complémentaire à une des zones 160 ou 165. Le maintien de la bicyclette 100 au dispositif 170 est généralement effectué en utilisant une force d'attraction magnétique, par la présence d'un aimant permanent ou non. Un électroaimant peut être prévu pour créer une contre-force magnétique afin de détacher plus facilement la bicyclette 100.

Afin de déclencher l'électroaimant, un dispositif indiquant la préhension de la bicyclette 100 par un utilisateur peut avantageusement être compris dans la bicyclette 100. Ce dispositif de détection de la préhension peut être par exemple placé au niveau du guidon 130 de la bicyclette 100 afin de détecter par l'intermédiaire d'un accéléromètre un mouvement du guidon 130.

Le dispositif 170 peut notamment être une borne fixe ou une autre bicyclette similaire, voire identique, à la bicyclette 100.

En effet, les zones 160 et 165 d'accroche présentes d'un côté, par exemple du côté gauche de la bicyclette 100, ont une forme et/ou une polarité complémentaire aux zones 160 et 165 d'accroche en regard, de l'autre côté, par exemple du côté droit de la bicyclette 100.

Il convient de souligner que deux zones 160 d'accroche et les deux zones 165 d'accroche sont positionnées latéralement dans un plan perpendiculaire à l'axe longitudinal 150, afin de permettre un stockage des bicyclettes 100 en ligne perpendiculairement à l'axe 150. Les zones d'accroche 160 et 165 présentent généralement une face plane parallèle à l'axe longitudinal 150, chaque face plane étant apte à venir au contact d'une face plane présentée par la zone d'accroche 180.

La bicyclette 100 comprend également une batterie 190 reliée à un dispositif électrique d'assistance au pédalage 191, et un module 195 électronique comportant un microprocesseur, une mémoire informatique et un dispositif de communication sans fil 196. Le dispositif de communication sans fil 196 est basé par exemple sur un protocole Wi-Fi, sur un protocole Bluetooth Low Energy® (BLE), ou sur tout autre protocole bien connu de l'homme du métier. Le module 195 électronique peut également être appelé microcontrôleur.

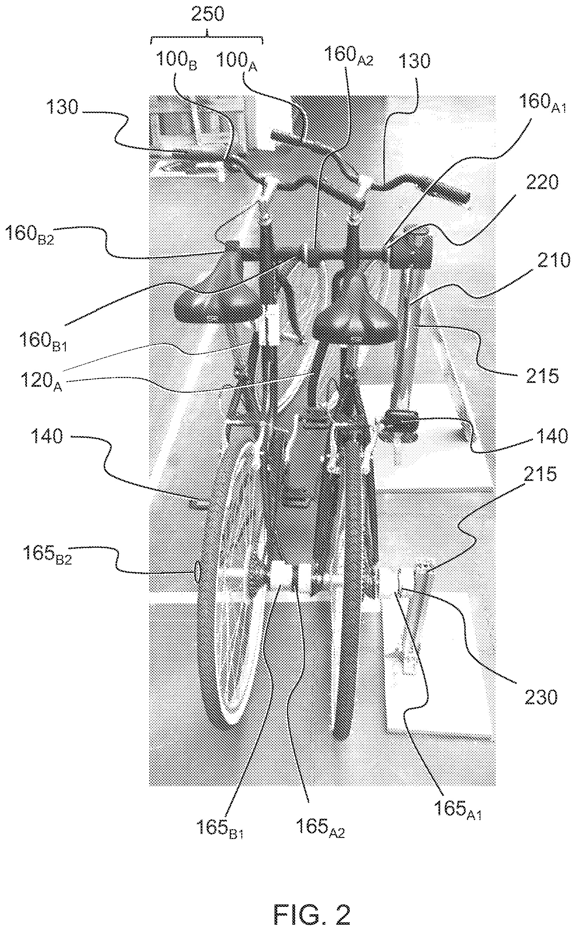

La figure 2 illustre le stockage de deux bicyclettes 100 à une borne 210 comprenant deux mâts 215.

La borne 210 présente une zone 220 sur laquelle est maintenue par aimantation à la zone $160_{A1}$ du côté droit de la première bicyclette $100_A$ et une zone 230 sur laquelle est maintenue par aimantation à la zone $165_{A1}$ du côté droit de la première bicyclette $100_A$.

Dans des variantes de ce mode de réalisation particulier de l'invention, la borne 210 comprend également un module électronique comportant un microprocesseur, une mémoire informatique et un dispositif de communication sans fil. Le module électronique de la borne est généralement similaire au module électronique 195 de la bicyclette 100.

La deuxième bicyclette $100_B$ est ensuite positionnée sur la première bicyclette 100. Pour maintenir la deuxième bicyclette $100_B$ à la première bicyclette $100_A$, la zone d'accroche $160_{B1}$ du côté droit de la deuxième bicyclette $100_B$ est maintenue par aimantation à la zone $160_{A2}$ du côté gauche de la première bicyclette $100_A$.

Les zones d'accroche $160_{B2}$ $165_{B2}$ à gauche de la bicyclette 100 sont libres pour l'accrochage d'une autre bicyclette.

Un utilisateur souhaitant utiliser une bicyclette 100 du stock 250, prend la première bicyclette 100 disponible, à savoir celle qui est à l'opposé à la borne 210.

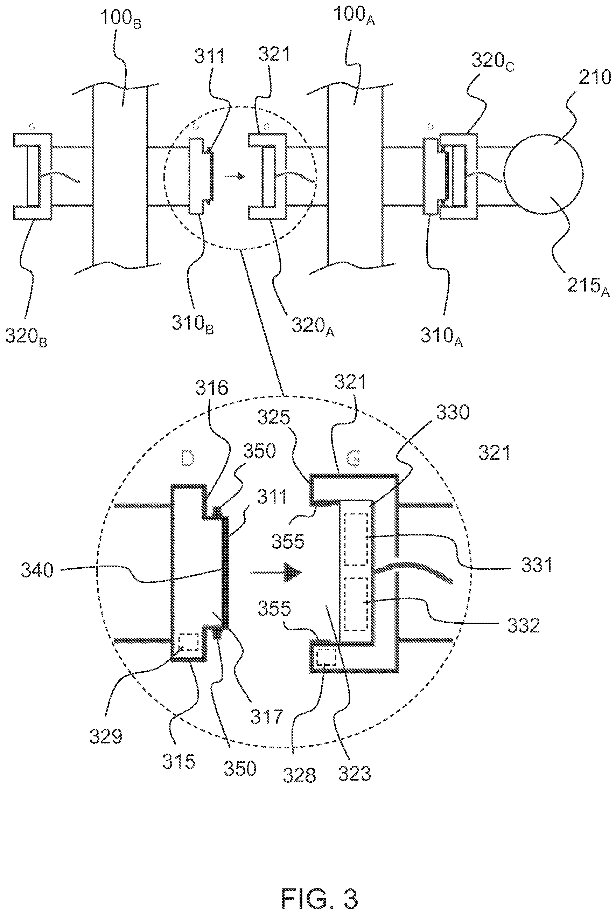

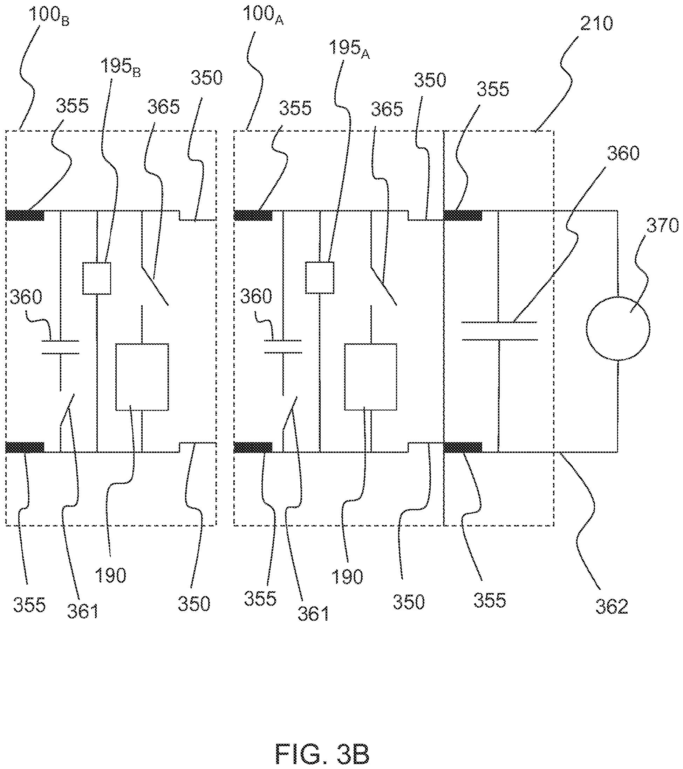

La figure 3 est une vue schématique représentant en détail un exemple de mécanisme d'accouplement entre deux zones d'accroches avant 160, à savoir entre une zone d'accroche 310 et une zone d'accroche complémentaire 320.

La figure 3 présente ainsi une borne 210 et deux bicyclettes identiques 100. La bicyclette $100_A$ est accouplée à la borne 210 par l'intermédiaire d'une zone d'accroche avant $310_A$, située dans le présent exemple non limitatif de l'invention à droite de la bicyclette $100_A$, et d'une zone d'accroche complémentaire $320_C$, fixée au mât $215_A$ de la borne 210.

La bicyclette $100_A$ comprend également une zone d'accroche complémentaire $320_A$, située sur son côté gauche, et destinée à être accouplée avec une zone d'accroche $310_B$ de la bicyclette $100_B$,

Il convient de souligner qu'un dispositif de nature quelconque peut venir s'accoupler au stock 250 dans la mesure où il présente au moins une zone d'accroche 310 ou au moins une zone d'accroche complémentaire 320.

La zone d'accroche 310 présente un élément mâle 311 venant coopérer avec un élément femelle 321 d'une zone d'accroche avant 320.

L'élément mâle 311 de la zone d'accroche 310 est configurée dans le présent exemple non limitatif de l'invention par une pièce cylindrique 315 comprenant un épaulement 316 entourant un bossage cylindrique 317. L'épaulement 316 est destiné à venir en butée sur l'élément femelle 321 qui comprend un évidement de forme oblongue configurant un logement 323 dans lequel vient s'insérer le bossage cylindrique 317 présenté par l'élément mâle 311.

Il convient de souligner que la forme de l'évidement est avantageusement oblongue dans le sens vertical afin de pallier à des irrégularités du sol sur lequel reposent les bicyclettes $100_A$, $100_B$ et la borne 210, en offrant un degré de liberté vertical, la largeur de la forme oblongue étant sensiblement supérieure au diamètre du bossage 317.

Ainsi, l'élément mâle 311 peut se fixer à différentes hauteurs, avec une liberté verticale de l'ordre de dix millimètres par rapport au centre du logement 323.

Chaque bicyclette 100 comprend une identification inscrite dans un tag NFC (acronyme anglais de « Near Field Communication ») 328 compris dans l'élément femelle 321, ainsi qu'un lecteur NFC 329 compris dans l'élément male 311 apte à lire le tag NFC 328 d'une bicyclette 100 voisine.

Afin de maintenir en contact les deux zones d'accroche 310 et 320, une ventouse électromagnétique 330 fixée au fond du logement 323 coopère avec une plaque 340 d'acier fixée à l'extrémité plane du bossage 317.

Ainsi, lorsque le bossage 317 est inséré dans le logement 323, la zone d'accroche 310 est attirée par la force magnétique exercée par la ventouse magnétique 330 sur la plaque 340.

La ventouse électromagnétique 330 comprend un aimant permanent 331 et une bobine 332 qui, lorsqu'elle est alimentée, crée un contre-champ magnétique réduisant ou neutralisant le champ magnétique de l'aimant 331, afin de permettre de désaccoupler plus facilement deux zones d'accroche 310 et 320.

Il convient de souligner que la ventouse électromagnétique 330 est avantageusement en retrait dans l'élément femelle 321, au lieu d'être placé sur l'élément mâle 311, réduisant ainsi le risque d'aimantation intempestive d'éléments métalliques se trouvant à proximité de la ventouse 330.

Dans des variantes de ce mode de réalisation particulier de l'invention, la ventouse magnétique comprend un aimant permanent et un mécanisme de déplacement de l'aimant entre une position proche et une position éloignée de la surface extérieure 325, la position éloignée conférant une force d'aimantation plus réduite que dans la position proche.

Lorsque les zones d'accroche 310 et 320 sont en contact, l'épaulement 316 est en butée sur la surface extérieure 325, et une connexion électrique est établie entre les deux zones d'accroches 310 et 320 par l'intermédiaire de deux connecteurs 350 radialement en saillie sur le pourtour du bossage 317.

Pour l'établissement de la connexion électrique, les deux connecteurs 350, diamétralement opposés horizontalement, sont en contact de deux plaques 355 présentées par les faces planes verticales du logement 323 de forme oblongue. Ainsi, le contact électrique est assuré quel que soit la hauteur d'accouplement entre les zones d'accroche 310 et 320.

Avantageusement, les connecteurs 350 comprennent un ressort afin d'assurer le contact électrique entre les connecteurs 350 et les plaques 355. Le ressort permet également de rattraper une différence de distance pouvant apparaître si l'axe formé par les deux connecteurs 350 est incliné par rapport à la tangente des plaques 355, ce qui peut être le cas lorsque le sol comprend des aspérités. L'angle maximum admissible est généralement de l'ordre de 5 à 10°.

Il convient de souligner que pour chaque bicyclette 350, chaque connecteur 350 est connecté à une plaque 355 afin de connecter électriquement l'ensemble des bicyclettes 100 du stock 250 en réalisant un circuit électrique, dit circuit de charge, qui est généralement alimenté par une tension de charge continue.

La figure 3B représente un schéma électrique simplifié des bicyclettes $100_A$ et $100_B$ et de la borne 210. Ce schéma électrique comprend le circuit de charge 362 reliant chaque batterie 190 en parallèle.

Afin de connecter ou déconnecter chaque batterie 190 du circuit de charge, un interrupteur 365 relie chaque batterie 190 au circuit de charge 362.

Le circuit de charge 362 est alimenté par une source d'alimentation électrique 370, qui est par exemple un réseau électrique, un générateur électrique ou une batterie électrique, et qui délivre généralement un courant à tension continue. Le circuit de charge 362 se termine par deux plaques 355 libres pour une connexion avec une autre bicyclette 100.

Afin de pouvoir déterminer si la connexion électrique est bien établie lors de l'accouplement, les plaques 355 de chaque zone 320 d'accouplement complémentaire sont connectées entre elles par l'intermédiaire d'un condensateur 360. Il convient de souligner que la tension de charge étant généralement continue, le condensateur 360 ne court-circuite pas le circuit de charge 362.

Lorsque la bicyclette $100_B$ est accouplée à la bicyclette $100_A$, un signal de tension alternative est émis par le module électronique 195 de la bicyclette $100_B$, connecté en parallèle au circuit de charge 362, et circule dans le circuit de charge 362 en se superposant à la tension de charge continue.

Il convient de souligner que le module électronique 195 comprend avantageusement des moyens de protection électronique (non représentés sur la figure) évitant que le module électronique 195 ne soit endommagé par le courant de charge circulant dans le circuit 362.

Le signal alternatif circulant à travers le condensateur de la bicyclette $100_B$, le circuit électrique étant ainsi fermé même si les batteries 190 ne sont pas connectées au circuit de charge 362, le module électronique de la bicyclette $100_B$ a ainsi l'information que le contact électrique est bien effectué entre les deux bicyclettes $100_A$ et $100_B$. Le module électronique de la bicyclette $100_B$ peut alors envoyer un signal sonore ou visuel à l'extérieur de la bicyclette $100_B$, visible par un individu.

Il convient de souligner que la circulation du signal alternatif ne nécessite pas que le stock 250 soit connecté à la borne 210 ou que la borne 210 soit reliée à la source d'alimentation électrique 370. En d'autres termes, il est possible de confirmer l'accouplement entre deux bicyclettes 100 sans qu'aucune des bicyclettes ne soit accouplée à la borne 210 ou lorsque la borne 210 n'est pas alimentée en courant par une source d'alimentation.

En outre, afin d'éviter que le module électronique 195 d'une bicyclette 100 n'indique que la bicyclette 100 est accouplée avec une bicyclette 100 similaire ou avec la borne 210 lorsque la bicyclette 100 est libre, un interrupteur 361 est associé au condensateur 360 de chaque bicyclette 100. A cet effet, l'interrupteur 361 est ouvert lorsque la bicyclette 100 est libre. Lorsque la bicyclette 100 est accouplée, par exemple au stock 250, l'interrupteur 361 de ladite bicyclette 100 est fermé dès lors que le module électronique 195 détecte l'accouplement par l'établissement de la connexion électrique avec le stock 250.

Dès lors que l'accouplement de la bicyclette $100_B$ avec la bicyclette $100_A$ est effectué, un signal alternatif envoyé par le module électronique 195s peut circuler dans le circuit électrique fermé par au moins le condensateur 360 de la borne 210 ou de la bicyclette $100_A$.

Lorsque la connexion électrique est établie successivement entre chaque bicyclette 100 du stock 250, la connexion électrique peut notamment servir à recharger la batterie 190 de tout ou partie des bicyclettes 100 connectées à la borne 210.

A cet effet, un courant électrique de charge circule à travers tout ou partie des bicyclettes 100 du stock 250.

Compte-tenu que la borne 210 a généralement une puissance électrique disponible limitée, une stratégie de recharge astucieuse peut être mise en place afin de privilégier le rechargement de la batterie 190 d'une ou plusieurs bicyclettes parmi les bicyclettes 100 accrochées à la borne 210.

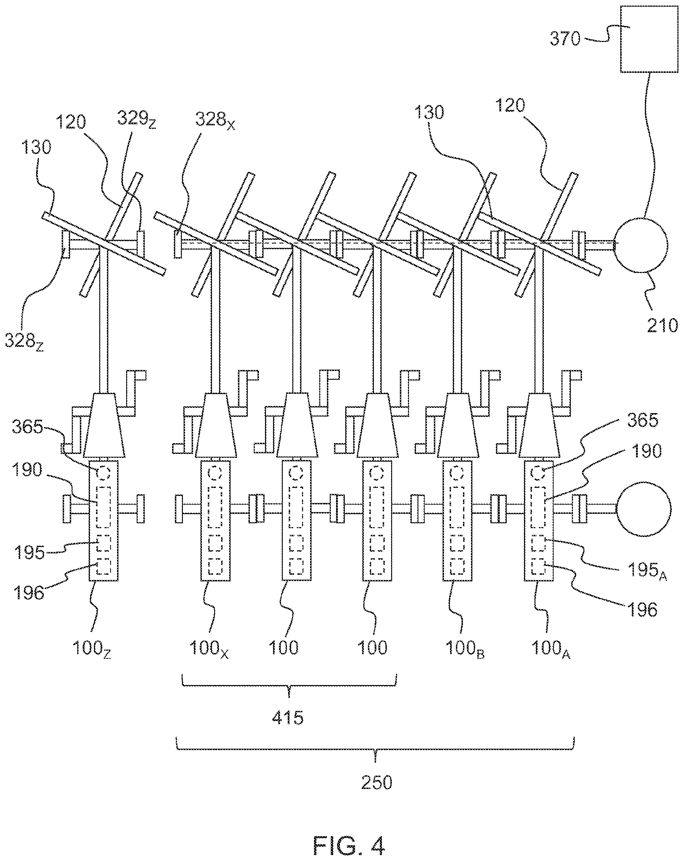

Comme illustré en figure 4, une stratégie de recharge est par exemple de recharger en priorité la bicyclette 100x située à l'extrémité libre du stock 250, voire une pluralité de bicyclettes 100 situées à proximité d'une extrémité libre du stock 250, comprises par exemple dans le lot 415 comprenant les trois bicyclettes situées au bout de l'extrémité libre du stock 250. Parmi le lot 415, il peut être choisi préférentiellement de recharger celles ayant les batteries ayant un niveau d'énergie plus faibles que les autres, ou ayant un niveau d'énergie inférieur à un seuil prédéterminé.

Afin de gérer la stratégie de recharge, le module 195 de la bicyclette $100_A$ accrochée à la borne 210 sert de « maître » et envoie une commande aux modules 195 de chaque bicyclette 100 du stock 250 indiquant soit de connecter ou de déconnecter la batterie 190 de la ligne de charge. A cet effet, un interrupteur électrique 365, apte à être commandé à distance, est inséré dans le circuit électrique reliant la batterie 190 de chaque bicyclette 100 au circuit de charge.

Il convient de souligner que lorsque la bicyclette 100z est accouplée à la bicyclette 100$_X$ située à l'extrémité libre du stock 250, le lecteur NFC 329z lit le tag NFC 328x de la bicyclette 100x comprenant la liste des identifiants du stock 250, incluant les bicyclettes 100 et la borne 205, et met à jour le tag NFC 328z en ajoutant à la liste, l'identifiant de la bicyclette 100z.

La liste peut également comprendre une indication de l'état de la batterie de chaque bicyclette 100

La liste peut ensuite être communiquée au module 195$_A$ de la bicyclette 100$_A$ « maître » ou à un serveur distant de gestion de la flotte de bicyclettes 100, par l'intermédiaire par exemple d'un dispositif de télécommunication sans fil, comprenant par exemple une antenne 3G, installé soit sur une bicyclette 100 ou soit sur la borne 205.

Lorsque le module 195$_A$ de la bicyclette 100$_A$ reçoit la liste des bicyclettes 100 et des états de leurs batteries 190, le module 195$_A$ traite les données afin de déterminer quelles sont les batteries 190 à charger en priorité afin d'optimiser leur temps de rechargement et permettre à un utilisateur d'avoir plus de chances de pouvoir prendre une bicyclette 100 située à l'extrémité libre du stock 250 et de profiter de l'assistance électrique au pédalage, la batterie 190 de la bicyclette 100 utilisé ayant été préalablement rechargée.

Le module 195$_A$ envoie, par l'intermédiaire du dispositif de communication sans fil 425, à chaque bicyclette 100 une commande indiquant l'ouverture ou la fermeture de l'interrupteur 365 de chaque bicyclette 100, afin de connecter uniquement les batteries 190 sélectionnées, en vue de les recharger.

Les batteries 190 sélectionnées, une fois connectées au circuit de charge sont ensuite rechargées par l'intermédiaire du courant électrique de charge circulant dans le circuit de charge à travers tout ou partie des bicyclettes 100 du stock 250.

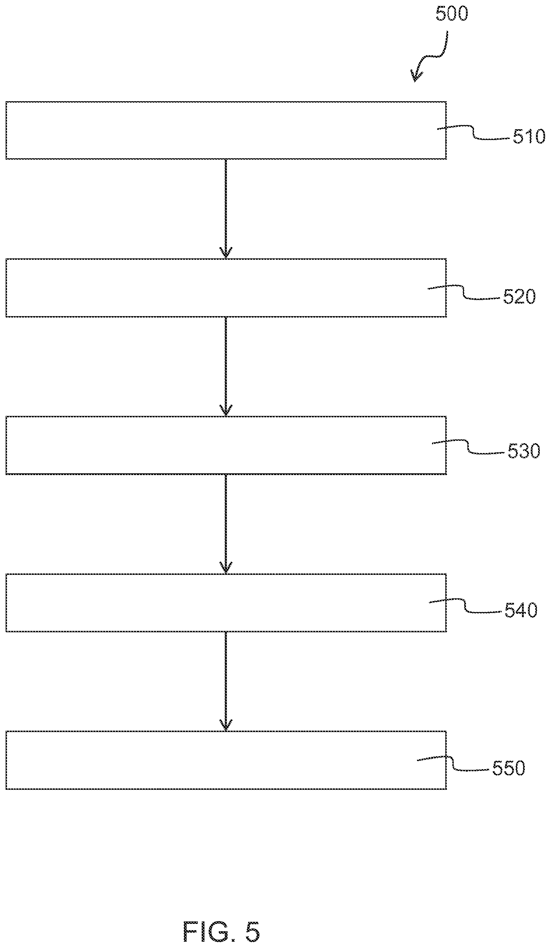

La figure 5 représente sous la forme d'un schéma synoptique le procédé 500 de rechargement d'une batterie 190 de tout ou partie des bicyclettes 100 du stock 250 accouplé à la borne 210.

Le procédé 500 comprend une première étape de détermination 510 d'un module électronique « maître », parmi les bicyclettes 100 du stock 250. Le module électronique « maître » correspond dans le présent exemple non limitatif de l'invention au module électronique 195 de la bicyclette 100$_A$. Le module 195$_A$ va ainsi recevoir les informations concernant le stock 250 afin de piloter le rechargement de tout ou partie des batteries 190 du stock 250.

La deuxième étape du procédé 500 est une étape 520 de communication au module 195$_A$ « maître » de la liste des bicyclettes 100 du stock 250 et de l'état de leur batterie 190.

A partir de cette liste, une sélection d'au moins une batterie 190 à charger est effectuée, au cours d'une troisième étape 530 à partir de l'état de charge des batteries 190 et de leur proximité de l'extrémité libre du stock 250.

Dans le présent exemple non limitatif de l'invention, la sélection comprend deux batteries 190 ayant un niveau de charge inférieur à un seuil prédéterminé, parmi les batteries du lot 415.

A partir de la liste des batteries sélectionnées, une commande est ensuite communiquée par le module 195$_A$ de la bicyclette 100$_A$ à chaque bicyclette 100 du stock 250 au cours d'une quatrième étape 540. La commande communiquée à une bicyclette 100 donnée indique si la batterie 190 de ladite bicyclette doit être connectée au circuit de charge 362 ou si elle doit être déconnectée. La commande se traduit par conséquent respectivement par la fermeture ou par l'ouverture de l'interrupteur 365 associée à ladite batterie 190.

Les batteries 190 sélectionnées sont ensuite rechargées au cours de la cinquième étape 550.

Autre exemple de mode de réalisation de l'invention

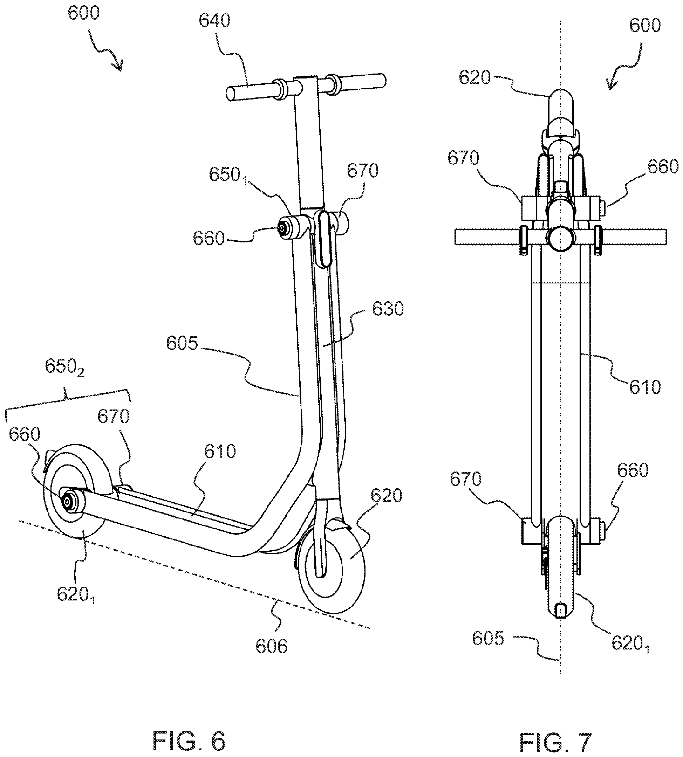

Les figures 6 et 7 illustrent une structure 605 d'une trottinette 600, respectivement selon une vue en perspective et une vue du dessus.

La structure 605, couramment appelée par le terme anglais « *deck* », comprend un plateau 610 et une potence 630.

Afin de former la trottinette 600, la structure 605 est assemblée avec deux roues 620 et un guidon 640.

Comme on peut le voir sur la figure 7, il convient de souligner que la structure 605 de la trottinette 600 est sensiblement symétrique selon un plan médian longitudinal 605. Le plan médian longitudinal 605 est généralement vertical lorsque la trottinette 600 est propulsée selon l'axe de déplacement 606 usuel, correspondant aux roues 620 parallèles.

Afin de pouvoir former un stockage compact, la structure 605 de la trottinette 600 comprend deux jeux 650 d'accouplement, l'un 650$_1$ fixé à la potence 630 et l'autre 650$_2$ fixé au plateau 610, à proximité de la roue arrière 620$_1$.

Chaque jeu 650 d'accouplement comprend des moyens d'accroche et des moyens d'accroche complémentaire, disposés de part et d'autre du plan médian longitudinal 605 de la trottinette 600 afin que deux trottinettes 600 puissent s'accoupler ensemble.

A cet effet, les moyens d'accroche de chaque jeu 650 d'accouplement comprennent une zone d'accroche 660 présentant un élément mâle venant coopérer avec un élément femelle complémentaire d'une zone d'accroche 670 comprise dans les moyens d'accroche complémentaire.

Les zones d'accroche 660 et 670 sont similaires aux zones d'accroche 310 et 320 du mode de réalisation précédent, présentées notamment en figure 3.

Afin de pouvoir être identifié, chaque trottinette 600 comprend un tag NFC et un lecteur de tag NFC, de manière similaire au mode de réalisation précédent.

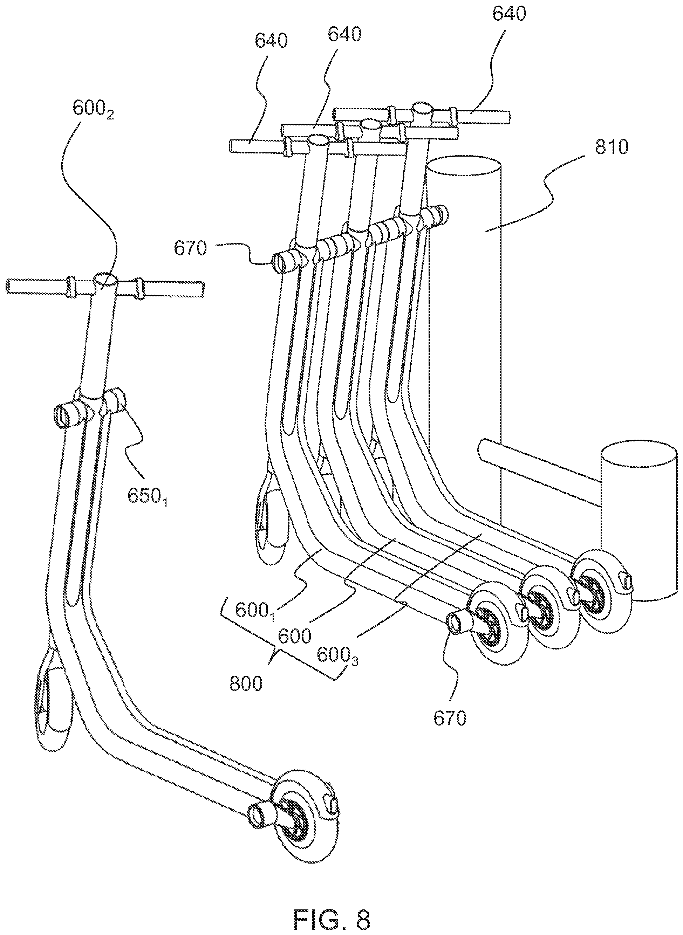

Une vue en perspective d'un ensemble de trottinettes 600 connectées à la chaîne est présentée en figure 8. Cet ensemble 800 de trottinettes 600, appelé « stock ».

Le stock 800 comprend ici trois trottinettes 600 accouplées deux à deux, la trottinette $600_1$ à l'extrémité du stock 800.

Le stock 800 présente sur la figure 8 deux zones d'accroche complémentaire 670 libre afin qu'une quatrième trottinette $600_2$ puisse s'accoupler à la trottinette $600_1$ située à l'extrémité libre du stock 800.

La trottinette 600 comprend également un moteur électrique (non représenté sur la figure) alimenté par une batterie (non représentée sur la figure) afin de propulser la trottinette 600. En d'autres termes, le moteur électrique est un dispositif d'assistance à la propulsion de la trottinette 600.

Afin de connecter électriquement les trottinettes 600 du stock 800, les zones d'accroche 660 et 670 peuvent également comprendre des moyens de connexion électrique pour créer une connexion électrique entre deux trottinettes 600 accouplées l'une à l'autre. Les moyens de connexion électrique peuvent être similaires à ceux présentés en figure 3.

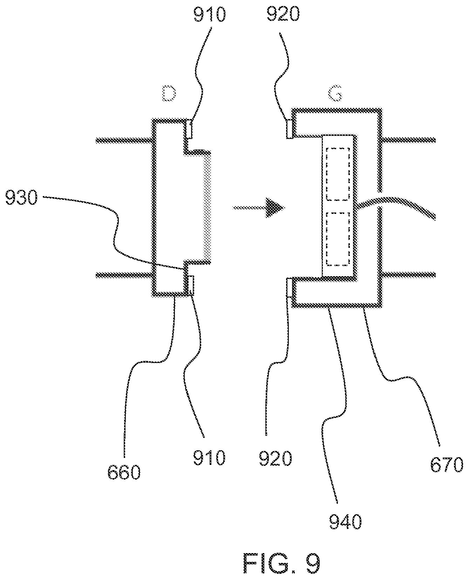

Toutefois, dans le présent exemple non limitatif, comme illustré en figure 9, la connexion électrique est simplifiée par un simple contact entre des armatures métalliques 910 et 920 des zones d'accroche 660 et 670 d'un même jeu d'accouplement. Les armatures métalliques 910 sont notamment situées en surface d'un épaulement 930 présenté par la zone d'accroche 660 et destiné à venir en butée avec un bord 940 d'un élément femelle présenté par la zone d'accroche complémentaire 670. A la surface du bord 940, est situé une armature métallique 920 de telle sorte que le contact électrique entre l'armature 920 et l'armature 910 puisse être établi lorsque les deux zones d'accrociie 660 et 670 sont en contact.

Il convient de souligner que le jeu d'accouplement arrière comprend également une connexion électrique, permettant dans le présent exemple non limitatif de l'invention de connecter les masses électriques ensemble.

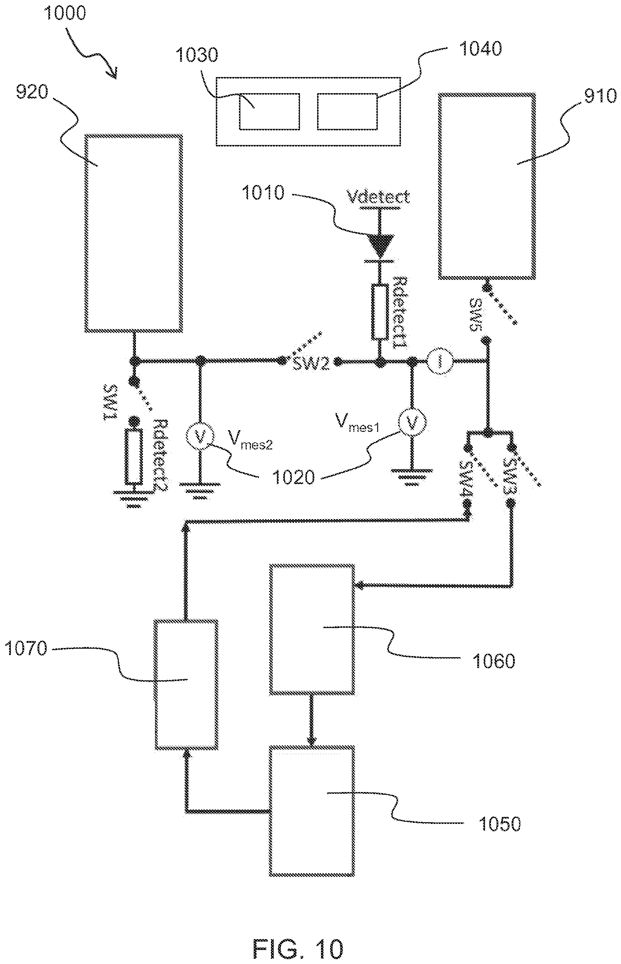

La figure 10 est un schéma du circuit électrique 1000 compris entre les armatures métalliques 910 et 920 du jeu d'accouplement $650_1$ situé à l'avant de la trottinette $600_2$.

Le circuit électrique 1000 comprend plusieurs configurations déterminées par l'ouverture et la fermeture d'interrupteurs notés SWX sur la figure où X fait référence au numéro dudit interrupteur. Les interrupteurs électroniques SWX sont commandés par un module électronique 1030 compris dans la trottinette 600.

Par défaut, les interrupteurs SW1 et SW5 sont fermés et les interrupteurs SW2, SW3 et SW4 sont ouverts, ce qui est notamment le cas lorsque la trottinette $600_2$ n'est pas connectée à une autre trottinette 600. Une alimentation électrique 1010 applique une tension $V_{detect}$ à une résistance électrique $R_{detect1}$ de l'ordre de 100 kOhm. En outre, un voltmètre 1020 mesure la tension $V_{mes1}$ de l'armature métallique 910, correspondante à l'électrode droite.

Lorsque l'armature métallique 910 n'est pas connectée, la tension $V_{mes1}$ est égale à $V_{detect}$. La tension $V_{mes1}$ est modifiée lorsque l'armature métallique 910 est connectée à une armature métallique 920 de la trottinette $600_1$ du stock 800 de la figure 8. Cette connexion crée un pont diviseur en reliant $R_{detect1}$ a une résistance $R_{dectect2}$ du circuit électronique 1000 de la trottinette $600_1$. La tension $V_{mes1}$ induite par le pont diviseur créé par cette connexion est alors égale à :

$$V_{mes1} = V_{detect} \frac{R_{detect2}}{R_{detect1} + R_{detect2}}$$

Les valeurs des résistances $R_{dectect1}$ et $R_{dectect2}$ sont généralement d'un même ordre de grandeur, voire égales.

Le module électronique de la trottinette $600_2$ peut ainsi détecter lorsque la trottinette $600_2$ est connectée à la trottinette $600_1$.

En outre, le module électronique de la trottinette $600_1$ peut également détecter une connexion sur l'armature gauche 920 présentée par les moyens d'accroche complémentaire 670 libre. Lorsque la tension $V_{mes2}$ mesurée sur l'armature gauche 920 correspondant à l'électrode gauche est nulle, le module électronique 1030 en déduit qu'aucune trottinette 600 n'est connectée. Toutefois, lorsque la tension $V_{mes2}$ mesurée sur l'armature gauche est non nulle, le module électronique 1030 de la trottinette $600_1$ déduit qu'une nouvelle trottinette 600 est connectée au stock 800. Dans ce cas la tension $V_{mes2}$ est également égale à :

$$V_{mes2} = V_{detect} \frac{R_{detect2}}{R_{detect1} + R_{detect2}}$$

Il convient de souligner que l'interrupteur SW2 des trottinettes 600 du stock 800 est généralement fermé, sauf pour la trottinette $600_1$ où l'interrupteur SW2 est ouvert afin de pouvoir être détecté par la trottinette $600_2$ et pouvoir détecter la connexion de la trottinette $600_2$ Dès lors où la trottinette $600_2$ est accouplée à la trottinette $600_1$, l'interrupteur SW2 de la trottinette $600_1$ est fermé.

Par ailleurs, la borne 810 peut comprendre un circuit électronique comportant au moins une résistance $R_{detectB}$ entre l'armature métallique 1110 et la masse, afin que le module électronique 1030 d'une trottinette 600 puisse détecter si son armature droite 910 est connectée à la borne 810.

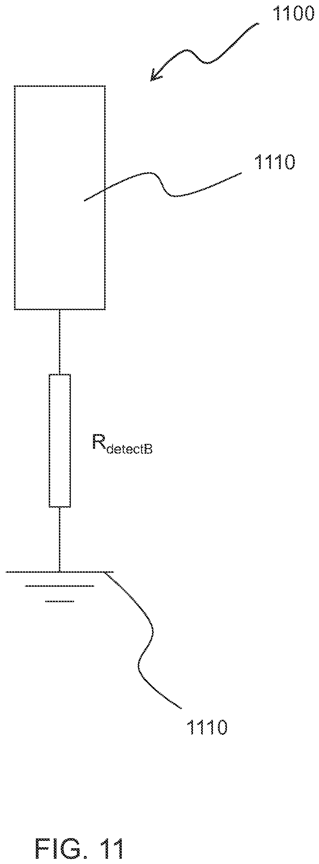

Un exemple d'un tel circuit 1100 est illustré en figure 11 où la résistance $R_{detectB}$ est comprise entre l'armature métallique 1110 et la masse 120. Le circuit 1100 correspond à une borne 810 sans alimentation électrique.

La valeur de la résistance $R_{detectB}$ est généralement distincte de $R_{detect2}$ afin que le module 1030 de la trottinette $600_3$ qui est la première à être connectée à la borne 810 puisse identifier que la trottinette $600_3$ est accouplée à la borne 810 et non à une autre trottinette 600. Toutefois, dans certaines configurations de borne, la valeur de $R_{detectB}$ est similaire ou égale à $R_{detect2}$.

Concernant la trottinette $600_3$ qui est la première à être connectée à la borne 810, dès lors où le module électronique 1030 de la trottinette $600_3$ a détecté qu'il est connecté à la borne 810, l'interrupteur SW5 de la trottinette $600_3$ est ouvert si la borne 810 n'est pas alimentée électriquement afin d'éviter des pertes électriques. Une identification de la borne 810 peut par exemple être transmise au module électronique 1030 par une balise de type beacon BLE présente dans la borne 810. Une telle balise émet notamment à intervalles réguliers un signal de présence selon la norme Bluetooth® qui est capté par l'antenne 1040 de la trottinette $600_3$.

Dans des variantes de ce mode de réalisation particulier de l'invention, l'interrupteur SW5 est remplacé par un fil et la valeur de la résistance $R_{detectB}$ est plus importante que $R_{detect2}$. Par exemple, $R_{detectB}$ est de l'ordre de 500 kOhm au lieu de 100 kOhm. La valeur de la résistance $R_{detectB}$ est choisie de telle sorte que le courant électrique circulant dans la borne 810 soit très faible, réduisant ainsi les pertes électriques.

Lorsque la trottinette $600_2$ est connectée au stock 800, une antenne 1040 de réception d'un signal sans fil à la norme BLE ou WIFI de la trottinette $600_2$ scanne les signaux reçus sur une période prédéterminée, par exemple sur une période de dix millisecondes. Pour chaque signal reçu par l'antenne 1040, le module électronique 1030 de la trottinette $600_2$ mesure la puissance du signal reçu, à savoir le RSSI (acronyme du terme anglais « *Received Signal Strength Indication* »), pour déterminer la distance des trottinettes 600 du stock 800. A cet effet, chaque trottinette 600 du stock 800 émet un signal de présence à intervalles réguliers par leur antenne 1040. Chaque signal de présence comprend également une identification propre à chaque trottinette 600 du stock 800.

Le module électronique 1030 de la trottinette $600_2$ déduit ensuite à partir des valeurs des RSSI quelle trottinette 600 est la plus proche, en considérant qu'elle correspond au signal ayant le RSSI le plus élevé parmi les signaux reçus. Dans le cas présent la trottinette 600 la plus proche est la trottinette $600_1$

La trottinette $600_2$ établit également une connexion sans fil avec la trottinette $600_1$ via les antennes 1040, en échangeant notamment leur identifiant, ce qui permet au module électronique 1030 de la trottinette $600_1$ de connaître l'identifiant de la trottinette $600_2$.

Il convient de souligner que dans le cas où le module électronique 1030 de la trottinette $600_2$ se tromperait dans l'identification de la trottinette 600 la plus proche du stock 800, les trottinettes 600 du stock 800 peuvent communiquer entre elles de sorte à reconstituer le bon ordre dans le stock 800.

Dans des variantes de ce mode de réalisation particulier de l'invention, la communication entre deux trottinettes 600 connectées en série s'effectue via l'utilisation d'un tag NFC (acronyme du terme anglais « Near Field Communication ») et d'un lecteur NFC, ou via l'utilisation d'un tag RFID (acronyme du terme anglais « *Radio Frequency Identification* ») et d'un lecteur RFID.

Lorsque les trottinettes $600_1$ et $600_2$ ont identifié la connexion électrique entre elles, le module électronique 1030 de la trottinette $600_1$ ouvre l'interrupteur SW1 et ferme l'interrupteur SW2, permettant ainsi à la trottinette $600_2$ d'être connectée électriquement avec l'ensemble des trottinettes 600 du stock 800, voire avec la borne 810. Un nouveau circuit de charge est ainsi formé.

Ce nouveau circuit de charge comprend l'ensemble des circuits électroniques 1000 de chaque trottinette 600 du stock 800, qui sont connectés en série. Ainsi il est possible de transférer l'énergie électrique de proche en proche par l'intermédiaire d'un courant électrique circulant entre le circuit électronique 1000 d'une trottinette 600 et le circuit électronique 1000 d'une trottinette 600 voisine. En d'autres termes, le transfert d'énergie peut être effectué entre deux trottinettes 600 accouplées ensemble, c'est-à-dire deux trottinettes 600 consécutives dans le stock 800.

Il convient de souligner que la trottinette $600_2$ laisse ouvert l'interrupteur SW2 et fermé l'interrupteur SW1 afin de pouvoir détecter une connexion d'une autre trottinette 600.

Après la connexion de la trottinette $600_2$ avec l'ensemble des trottinettes 600 du stock 800, un module électronique 1030 est choisi comme référence parmi les modules électroniques 1030 du stock 800. Généralement, le module électronique 1030 de référence correspond à la trottinette $600_3$ se trouvant à l'extrémité droite du stock 800, qui est dans le présent exemple non limitatif de l'invention connectée à la borne 810.

Le module électronique de référence reçoit l'information de l'état de charge de chaque batterie 1050 du stock 800 grâce à une communication sans fil via les antennes 1040.

Dans des variantes de ce mode de réalisation particulier de l'invention, la communication est effectuée via un courant porteur de ligne (CPL).

Une sélection des batteries 1050 des trottinettes 600 du stock 800 est effectuée en fonction de l'état de charges de chaque batterie 1050 et de la position de chaque trottinette 600 par rapport à la trottinette $600_2$ qui correspond à l'extrémité libre du stock 800. Il est en effet préférable de charger en priorité les batteries des trottinettes $600_1$ et $600_2$ à un niveau de charge suffisant pour permettre à un individu de les utiliser avec suffisamment d'autonomie.

Toutefois, il se peut qu'une batterie 1050 des trottinettes $600_1$ ou $600_2$ soit suffisamment chargée, auquel cas il est préférable de charger la batterie d'une autre trottinette 600 du stock 800. Un seuil permettant d'établir si une batterie est suffisamment chargée ou non peut ainsi être déterminé.

Dans la phase de recharge, les interrupteurs SW3 des trottinettes sélectionnées en charge sont fermés tandis que ceux des trottinettes 600 qui n'ont pas été sélectionnées restent ouverts.

Un dispositif électronique 1060 permettant d'abaisser la tension appliquée aux bornes de la batterie 1050 à charger peut être inséré dans le circuit 1000 entre la batterie 1050 et l'interrupteur SW3. Un tel dispositif électronique est généralement connu de l'homme du métier par le terme anglais « *Buck charger* ».

Par ailleurs, l'alimentation électrique des batteries 1050 à charger provient soit de la borne 810 lorsque celle-ci est alimentée électriquement ou d'au moins une batterie 1050 du stock 800 dont le niveau de charge est suffisant.

Par exemple, si la batterie 1050 de la trottinette $600_3$ a un niveau de charge plus important que la batterie 1050 de la trottinette $600_2$, l'interrupteur SW4 de la trottinette $600_3$ va être fermé afin d'alimenter le circuit de charge pour recharger la batterie 1050 de la trottinette $600_2$. Ainsi, l'énergie de la batterie 1050 de la trottinette $600_3$ est transférée à la batterie 1050 de la trottinette $600_2$ en passant successivement par le circuit électronique 1000 de chaque trottinette 600 du stock 800. En d'autres termes, un courant électrique de charge circule entre la batterie 1050 sélectionnée comme source d'alimentation, à savoir la batterie 1050 de la trottinette $600_3$ et la batterie 1050 sélectionnées à charger, à savoir la batterie 1050 de la trottinette $600_2$ en traversant les circuits électroniques 1000 des trottinettes 600 comprises entre les trottinettes $600_3$ et $600_2$.

Afin d'éviter les pertes en ligne un dispositif électronique 1070 permettant d'augmenter la tension à la sortie de la batterie 1050 afin d'éviter notamment les pertes en ligne dans le circuit de charge. Un tel dispositif est généralement connu de l'homme du métier sous le terme « *Boost DC/DC* ». Typiquement la valeur de la tension d'une batterie, dont la tension nominale est de 36 V, est de l'ordre de 30 V lorsqu'elle est déchargée. Lorsque la batterie est chargée, sa tension est de l'ordre de 42 V. Le boost permet quant à lui d'augmenter la valeur de la tension à 50 V.

Il convient de souligner que dans la mesure où la trottinette $600_3$ est éloignée de l'extrémité libre, la batterie 1050 de la trottinette $600_3$ peut servir à alimenter le circuit de charge pour recharger les batteries des trottinettes 600 qui sont susceptibles d'être utilisées en premier parmi les trottinettes 600 du stock 800.

Généralement, une distance par rapport à l'extrémité libre du stock 800 est déterminée, par exemple égale à trois, pour favoriser le chargement des batteries des trottinettes 600 comprises dans ce périmètre, à savoir parmi les trois premières trottinettes 600 à partir de l'extrémité libre du stock 800.

Un individu prenant la trottinette $600_2$ a ainsi plus de chance d'avoir une trottinette $600_2$ avec suffisamment d'autonomie car la batterie 1050 de la trottinette $600_2$ qui est la première trottinette 600 du stock 800 à pouvoir être prise par l'individu, a été rechargée en priorité si son niveau de charge n'était pas suffisant.

Il convient de souligner que si le niveau de charge de la batterie 1050 de la trottinette $600_2$ est suffisant, la batterie 1050 de la trottinette $600_2$ n'est pas utilisée pour recharger d'autres batteries 1050 du stock 800 afin de ne pas pénaliser l'individu souhaitant utiliser la trottinette $600_2$.

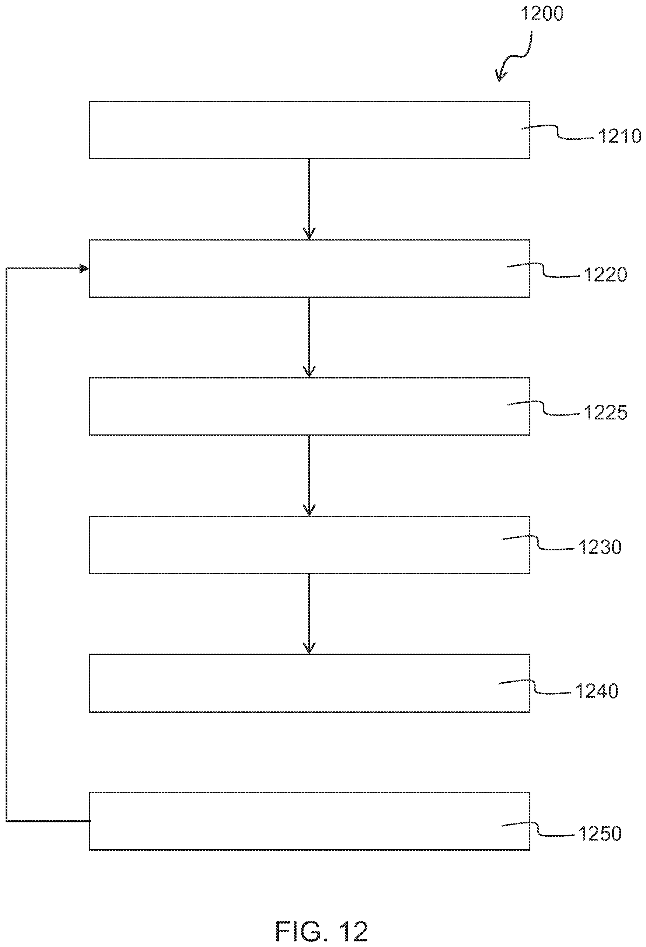

La figure 12 illustre sous la forme d'un schéma synoptique le procédé 1200 de rechargement mis en œuvre dans le présent exemple non limitatif de l'invention.

Le procédé 1200 comprend une première étape de détermination 1210 d'un module électronique dit « maître » parmi les modules électroniques compris dans les trottinettes 600 qui ont été détectées comme étant comprises dans le stock 800.

Généralement, le module électronique de la trottinette $600_3$ qui est la première connectée à la borne 810 est considéré comme le module maître.

Les trottinettes 600 communiquent les identifiants au module électronique dit module maître, ainsi que l'état de leur batterie 1050 et le nom d'au moins un voisin, au cours d'une deuxième étape 1220.

A partir de l'identifiant de chaque trottinette 600 du stock et d'au moins une trottinette 600 voisine pour chaque trottinette du stock, le module maître peut déterminer au cours de la troisième étape 1225 la position des trottinettes 600 du stock 800 par rapport à une extrémité du stock. En d'autres termes, le module maître détermine l'ordre de stockage des trottinettes 600 par rapport à la borne 810.

Le module maître peut ensuite sélectionner automatiquement, au cours de la cinquième étape 1230, les batteries 1050 à charger parmi les batteries 1050 du stock 800 en fonction de leur état de charge et de leur position par rapport à l'extrémité libre du stock 800.

Le modèle maitre commande ensuite l'état d'ouverture et de fermeture des interrupteurs SW3 et SW4 de chaque trottinette 600 du stock 800 en fonction des batteries à charger voire des batteries servant d'alimentation électrique pour charger les autres batteries.

Les batteries 1050 à charger sont ensuite rechargées au cours de la sixième étape 1240.

Le procédé 1200 comprend également une sixième étape 1250 de détection d'une modification du nombre de trottinettes 600 du stock. Cette modification peut correspondre à l'ajout ou au retrait d'une trottinette du côté libre du stock 800. Dès lors où un ajout est détecté, le procédé 1200 met à jour la sélection des batteries à charger en recommençant à l'étape 1220.

Il convient de souligner que cette étape 1250 peut être effectuée à n'importe quel moment du procédé 1200.

Il convient de souligner que le module maître étant généralement défini comme étant celui de la trotti-

nette $600_3$ accrochée à la borne 810, le module maître du stock 800 est inchangé tant que la trottinette $600_3$ n'est pas décrochée de la borne 810.

## Revendications

1. Procédé (500; 1200) de rechargement d'un dispositif de stockage d'énergie électrique (190 ; 1050) de tout ou partie d'une pluralité de véhicules (100 ; 600) connectés à la chaîne, l'ensemble des véhicules connectés à la chaîne étant appelé stock (250 ; 800), chaque véhicule comprenant un circuit électronique connecté audit dispositif de stockage d'énergie, le rechargement du ou des dispositif(s) de stockage d'énergie étant effectué par l'intermédiaire d'un courant électrique circulant entre les circuits électroniques d'au moins deux véhicules consécutifs parmi les véhicules du stock, les véhicules comprenant également chacun un module électronique (195), **caractérisé en ce que** le procédé comprend une étape de sélection (530; 1230) automatique d'au moins un dispositif de stockage d'énergie électrique à charger, en fonction de la position des véhicules par rapport à un véhicule de référence du stock et en fonction de l'état de charge du dispositif de stockage d'énergie électrique de chaque véhicule, la sélection de la ou des dispositif(s) de stockage d'énergie électrique à charger est restreinte à un nombre prédéterminé, ladite sélection comprenant la ou les dispositif(s) de stockage d'énergie électrique ayant un niveau de charge inférieur à un seuil prédéterminé, parmi les dispositifs de stockage d'énergie électrique des véhicules du stock situés à une distance prédéterminée d'une extrémité du stock, ladite extrémité correspondant au véhicule de référence du stock, le stock étant connecté à une borne reliée à une alimentation électrique (370) via un véhicule du stock, la borne comprenant un module électronique, le procédé comprenant également des étapes de :

   - détermination (510 ; 1210) d'un module électronique dit « maître » parmi les modules électroniques compris dans les véhicules du stock ou dans la borne ;
   - communication (520 ; 1220), au module maître ou à un serveur distant de gestion des véhicules, de la liste des véhicules du stock et de l'état du dispositif de stockage d'énergie électrique de chaque véhicule du stock ;
   - communication (540 ; 1240) par le module maître d'une commande au module de chaque véhicule du stock afin de connecter la ou les dispositif(s) de stockage d'énergie électrique sélectionnée(s) à un circuit de charge relié à l'alimentation, les autres dispositifs de stockage d'énergie électrique du stock étant déconnectés du circuit de charge ;

   - rechargement (550 ; 1250) des dispositifs de stockage d'énergie électrique sélectionnées ;
   - communication au module maître de la position des véhicules du stock par rapport à un élément de référence qui est un véhicule du stock ou la borne.

2. Procédé selon la revendication 1, dans lequel les circuits électroniques sont connectés en série.

3. Procédé selon l'une quelconque des revendications 1 à 2, dans lequel chaque véhicule comprend un jeu d'accouplement comprenant des moyens d'accroche ($160_1$, $165_1$, 310) et des moyens d'accroche complémentaire ($160_2$, $165_2$, 320), les moyens d'accroche étant aptes à s'accoupler à des moyens d'accroche complémentaire présentés par un deuxième véhicule (100) similaire ou par une borne (210), les véhicules du stock étant accouplés les uns aux autres, les moyens d'accroche et les moyens d'accroche complémentaire comprenant chacun des moyens de connexion électrique complémentaires, aptes à connecter électriquement ledit véhicule avec le deuxième véhicule ou avec la borne.

4. Procédé selon l'une quelconque des revendications 1 à 3, comprenant également des étapes de :

   - communication au module maître d'au moins un voisin pour chaque véhicule du stock ;
   - détermination (1225) de la position des véhicules du stock par rapport à un élément de référence qui est un véhicule du stock ou la borne.

5. Procédé selon l'une quelconque des revendications 1 à 4, comprenant également des étapes de :

   - détection (1250) d'une modification du nombre de véhicules du stock ;
   - mise à jour de la sélection du ou des dispositif(s) de stockage d'énergie électrique à charger.

6. Procédé selon l'une quelconque des revendications 1 à 5, dans lequel le module électronique d'un premier véhicule du stock détecte l'accouplement d'un deuxième véhicule du stock sur un des moyens d'accroche du premier véhicule, identifie le deuxième véhicule et établi un réseau de communication avec le deuxième véhicule.

7. Procédé selon l'une quelconque des revendications 1 à 6, dans lequel les communications sont effectuées via un protocole de communication sans fil tel que Bluetooth® Low Energy (BLE) ou Wifi.

8. Procédé selon l'une quelconque des revendications 1 à 7, dans lequel le véhicule est une bicyclette électrique ou une trottinette véhicule, ledit véhicule comprenant un dispositif d'assistance à la propulsion du véhicule.

**Patentansprüche**

1. Verfahren (500; 1200) zum Aufladen einer Speichervorrichtung (190; 1050) für elektrische Energie von allen oder einem Teil einer Vielzahl von Fahrzeugen (100; 600), die mit der Kette verbunden sind, wobei die Gesamtheit der Fahrzeuge, die mit der Kette verbunden sind, als Bestand (250; 800) bezeichnet wird, jedes Fahrzeug umfassend eine elektronische Schaltung, die mit der Energiespeichervorrichtung verbunden ist, wobei das Aufladen der Energiespeichervorrichtung(en) über einen elektrischen Strom erfolgt, der zwischen den elektronischen Schaltungen von mindestens zwei aufeinanderfolgenden Fahrzeugen unter den Fahrzeugen des Bestands fließt, die Fahrzeuge umfassend auch jeweils ein elektronisches Modul (195),

   **dadurch gekennzeichnet, dass** das Verfahren einen Schritt (530; 1230) zum automatischen Auswählen mindestens einer zu ladenden Speichervorrichtung für elektrische Energie in Abhängigkeit von der Position der Fahrzeuge relativ zu einem Referenzfahrzeug des Bestands und in Abhängigkeit von dem Ladezustand der Speichervorrichtung für elektrische Energie jedes Fahrzeugs umfasst, wobei die Auswahl der zu ladenden Speichervorrichtung(en) für elektrische Energie auf eine vorbestimmte Anzahl beschränkt ist, die Auswahl umfassend die Speichervorrichtung(en) für elektrische Energie, die einen Ladezustand unterhalb eines vorbestimmten Schwellenwerts besitzt/besitzen, unter den Speichervorrichtungen für elektrische Energie der Fahrzeuge des Bestands, die sich in einem vorbestimmten Abstand von einem Ende des Bestands befinden, wobei das Ende dem Referenzfahrzeug des Bestands entspricht, wobei der Bestand mit einem Anschluss verbunden ist, der über ein Fahrzeug des Bestands an eine elektrische Versorgung (370) gebunden ist, der Anschluss umfassend ein elektronisches Modul, das Verfahren umfassend auch die Schritte:

   - Bestimmen (510; 1210) eines elektronischen Moduls, das "Master" genannt wird, unter den elektronischen Modulen, die in den Fahrzeugen des Bestands oder in dem Anschluss enthalten sind;
   - Kommunizieren (520; 1220), an das Mastermodul oder an einen entfernten Fahrzeugverwaltungsserver, der Liste der Fahrzeuge des Bestands und des Status der Speichervorrichtung für elektrische Energie jedes Fahrzeugs des Bestands;
   - Kommunizieren (540; 1240) durch das Mastermodul eines Befehls an das Modul jedes Fahrzeugs des Bestands, um die ausgewählte(n) Speichervorrichtung(en) für elektrische Energie mit einer Ladeschaltung zu verbinden, die an die elektrische Versorgung gebunden ist, wobei die anderen Speichervorrichtungen für elektrische Energie des Bestands von der Ladeschaltung getrennt sind;
   - Aufladen (550; 1250) der ausgewählten Speichervorrichtungen für elektrische Energie;
   - Kommunizieren an das Mastermodul der Position der Fahrzeuge des Bestands relativ zu einem Referenzelement, das ein Fahrzeug des Bestands oder der Anschluss ist.

2. Verfahren nach Anspruch 1, wobei die elektronischen Schaltungen in Reihe geschaltet sind.

3. Verfahren nach einem der Ansprüche 1 bis 2, wobei jedes Fahrzeug einen Kupplungssatz umfasst, umfassend Befestigungsmittel ($160_1$, $165_1$, 310) und komplementäre Befestigungsmittel ($160_2$, $165_2$, 320), wobei die Befestigungsmittel geeignet sind, mit komplementären Befestigungsmitteln gekuppelt zu werden, die durch ein zweites ähnliches Fahrzeug (100) oder durch einen Anschluss (210) aufgewiesen werden, wobei die Fahrzeuge des Bestands miteinander gekuppelt sind, die Befestigungsmittel und die komplementären Befestigungsmittel umfassend jeweils komplementäre elektrische Verbindungsmittel, die geeignet sind, das Fahrzeug mit dem zweiten Fahrzeug oder mit dem Anschluss elektrisch zu verbinden.

4. Verfahren nach einem der Ansprüche 1 bis 3, umfassend auch die Schritte:

   - Kommunizieren an das Mastermodul von mindestens einem Nachbarn für jedes Fahrzeug des Bestands;
   - Bestimmen (1225) der Position der Fahrzeuge des Bestands relativ zu einem Referenzelement, das ein Fahrzeug des Bestands oder der Anschluss ist.

5. Verfahren nach einem der Ansprüche 1 bis 4, umfassend auch die Schritte:

   - Erfassen (1250) einer Änderung der Anzahl der Fahrzeuge des Bestands;
   - Aktualisieren der Auswahl der zu ladenden Speichervorrichtung(en) für elektrische Energie.

6. Verfahren nach einem der Ansprüche 1 bis 5, wobei das elektronische Modul eines ersten Fahrzeugs des Bestands die Kupplung eines zweiten Fahrzeugs des Bestands an einem der Befestigungsmittel des ersten Fahrzeugs erfasst, das zweite Fahrzeug identifiziert und ein Kommunikationsnetzwerk mit dem zweiten Fahrzeug aufbaut.

7. Verfahren nach einem der Ansprüche 1 bis 6, wobei die Kommunikation über ein Drahtloskommunikationsprotokoll wie Bluetooth® Low Energy (BLE) oder Wifi erfolgt.

8. Verfahren nach einem der Ansprüche 1 bis 7, wobei das Fahrzeug ein Elektrofahrrad oder ein Fahrzeugroller ist, das Fahrzeug umfassend eine Vorrichtung zum Unterstützen des Fahrzeugantriebs.

**Claims**

1. A method (500; 1200) for recharging an electrical energy storage device (190; 1050) of all or some of a plurality of vehicles (100; 600) connected to the chain, all the vehicles connected to the chain being referred to as the stock (250; 800), each vehicle comprising an electronic circuit connected to said energy storage device, the recharging of the energy storage device(s) being carried out by means of an electric current flowing between the electronic circuits of at least two consecutive vehicles among the vehicles in the stock, each of the vehicles also comprising an electronic module (195), **characterized in that** the method comprises a step of automatically selecting (530; 1230) at least one electrical energy storage device to be charged according to the position of the vehicles relative to a reference vehicle in the stock and according to the state of charge of the electrical energy storage device of each vehicle, the selection of the electrical energy storage device(s) to be charged is restricted to a predetermined number, said selection comprising the electrical energy storage device(s) having a charge level below a predetermined threshold, among the electrical energy storage devices of the vehicles in the stock situated at a predetermined distance from one end of the stock, said end corresponding to the reference vehicle in the stock, the stock being connected to a terminal which is connected to an electrical power supply (370) via a vehicle in the stock, the terminal comprising an electronic module, the method also comprising steps of:

- determining (510; 1210) a so-called "master" electronic module from the electronic modules included in the vehicles in the stock or in the terminal;
- communicating (520; 1220) to the master module or to a remote vehicle management server the list of vehicles in the stock and the state of the electrical energy storage device of each vehicle in the stock;
- communicating (540; 1240) by the master module a command to the module of each vehicle in the stock in order to connect the selected electrical energy storage device(s) to a charging circuit connected to the power supply, the other electrical energy storage devices in the stock being disconnected from the charging circuit;
- recharging (550; 1250) the selected electrical energy storage devices;
- communicating to the master module the position of the vehicles in the stock relative to a reference element which is a vehicle in the stock or the terminal.

2. The method according to claim 1, wherein the electronic circuits are connected in series.

3. The method according to any of claims 1 to 2, wherein each vehicle comprises a coupling set comprising attachment means ($160_1$, $165_1$, 310) and complementary attachment means ($160_2$, $165_2$, 320), the attachment means being suitable for being coupled to complementary attachment means provided by a second similar vehicle (100) or by a terminal (210), the vehicles in the stock being coupled to each other, the attachment means and the complementary attachment means each comprising complementary electrical connection means which are suitable for electrically connecting said vehicle to the second vehicle or to the terminal.

4. The method according to any of claims 1 to 3, also comprising the steps of:

- communicating to the master module at least one adjacent vehicle for each vehicle in the stock;
- determining (1225) the position of the vehicles in the stock relative to a reference element which is a vehicle in the stock or the terminal.

5. The method according to any of claims 1 to 4, also comprising the steps of:

- detecting (1250) a change in the number of vehicles in the stock;
- updating the selection of the electrical energy storage device(s) to be charged.

6. The method according to any of claims 1 to 5, wherein the electronic module of a first vehicle in the stock detects the coupling of a second vehicle in the stock to one of the attachment means of the first vehicle, identifies the second vehicle and establishes a communication network with the second vehicle.

7. The method according to any of claims 1 to 6, wherein the communications are carried out via a wireless communication protocol such as Bluetooth® Low Energy (BLE) or Wi-Fi.

8. The method according to any of claims 1 to 7, wherein the vehicle is an electric bicycle or a scooter vehicle, said vehicle comprising a device for assisting the propulsion of the vehicle.

FIG. 1

FIG. 2

FIG. 3

FIG. 3B

FIG. 4

FIG. 5

FIG. 6

FIG. 7

FIG. 8

FIG. 9

FIG. 10

FIG. 11

FIG. 12

**RÉFÉRENCES CITÉES DANS LA DESCRIPTION**

**Documents brevets cités dans la description**

- DE 102007038243
- FR 2018052385 W
- FR 2018053519 W